# EUROPEAN PATENT APPLICATION

(11) **EP 4 523 839 A1**
(43) Date of publication of application: **19.03.2025**
(21) Application number: 23826706.6
(22) Date of filing: 26.01.2023
(51) Int. Cl.: B23K 31/00

(54) **WELDING ASSISTANCE DEVICE, WELDING ASSISTANCE METHOD, AND PROGRAM**

(30) Priority: 24.06.2022 JP 2022101615
(71) Applicant: Mitsubishi Heavy Industries, Ltd., Tokyo 100-8332 (JP)
(72) Inventor: YASUDA, Masayuki, Tokyo 100-8332 (JP); NISHIKI, Hisashi, Tokyo 100-8332 (JP); NAGAO, Kenichi, Tokyo 100-8332 (JP); NAKASHIMA, Yoshiyuki, Tokyo 100-8332 (JP); MATSUBARA, Takanobu, Tokyo 100-8332 (JP); YAMASHINA, Yusuke, Tokyo 100-8332 (JP)
(74) Representative: Cabinet Beau de Loménie
(86) International application number: PCT/JP2023/002520
(87) International publication number: WO 2023/248513

(57) **Abstract**

A welding assistance device includes an acquisition unit configured to acquire welding data including a plurality of parameters indicating a welding state, a determination unit configured to calculate an abnormality degree of the welding data based on a learning model constructed by learning normal data including welding data collected during a period in which the welding state is normal, and the welding data acquired by the acquisition unit, an extraction unit configured to extract, based on the welding data, part of the normal data of the learning model as an optimal condition range, a setting unit configured to set a recommendation range of a value of at least one parameter included in the welding data based on the optimal condition range, and an output unit configured to output assistance information including the recommendation range.

## Description

### TECHNICAL FIELD

The present disclosure relates to a welding assistance device, a welding assistance method, and a program.

Priority is claimed on Japanese Patent Application No. 2022-101615, filed on June 24, 2022, the content of which is incorporated herein by reference.

### BACKGROUND ART

As a technology for improving welding quality, for example, Patent Document 1 discloses a technology of performing automatic welding by machine-learning a physical quantity related to arc welding, such as an appearance of a welding bead, and an arc welding condition, such as a welding speed and a protrusion length, and adjusting the arc welding condition based on a physical quantity obtained from imaging data.

### Citation List

### Patent Document

Patent Document 1: Japanese Patent No. 6126174

### SUMMARY OF INVENTION

### Technical Problem

However, since the technology disclosed in Patent Document 1 targets an automatic welding robot, it is difficult to apply the technology to welding work by a welder. Therefore, a method of stabilizing welding quality and suppressing an occurrence of a welding defect by assisting welding work performed by a welder is desired.

The present disclosure has been made in view of such problems and provides a welding assistance device, a welding assistance method, and a program capable of stabilizing welding quality and suppressing an occurrence of a welding defect in welding work performed by a welder.

### Solution to Problem

According to an aspect of the present disclosure, a welding assistance device includes an acquisition unit configured to acquire welding data including a plurality of parameters indicating a welding state, a determination unit configured to calculate an abnormality degree of the welding data based on a learning model constructed by learning normal data including welding data collected during a period in which the welding state is normal, and the welding data acquired by the acquisition unit, an extraction unit configured to extract, based on the welding data, part of the normal data of the learning model as an optimal condition range, a setting unit configured to set a recommendation range of a value of at least one parameter included in the welding data based on the optimal condition range, and an output unit configured to output assistance information including the recommendation range.

According to another aspect of the present disclosure, a welding assistance method includes a step of acquiring welding data including a plurality of parameters indicating a welding state, a step of calculating an abnormality degree of the welding data based on a learning model constructed by learning normal data including welding data collected during a period in which the welding state is normal, and the acquired welding data, a step of extracting, based on the welding data, part of the normal data of the learning model as an optimal condition range, a step of setting a recommendation range of a value of at least one parameter included in the welding data based on the optimal condition range, and a step of outputting assistance information including the recommendation range.

According to still another aspect of the present disclosure, a program causes a welding assistance device to perform: a step of acquiring welding data including a plurality of parameters indicating a welding state; a step of calculating an abnormality degree of the welding data based on a learning model constructed by learning normal data including welding data collected during a period in which the welding state is normal, and the acquired welding data; a step of extracting, based on the welding data, part of the normal data of the learning model as an optimal condition range; a step of setting a recommendation range of a value of at least one parameter included in the welding data based on the optimal condition range; and a step of outputting assistance information including the recommendation range.

### Advantageous Effects of Invention

With the welding assistance device, the welding assistance method, and the program according to the present disclosure, it is possible to stabilize welding quality and suppress the occurrence of a welding defect in welding work performed by a welder.

### BRIEF DESCRIPTION OF DRAWINGS

[FIG. 1] A block diagram representing a functional configuration of a welding assistance device according to an embodiment of the present disclosure.
[FIG. 2] A first flowchart representing an example of a process of the welding assistance device according to the embodiment of the present disclosure.
[FIG. 3] A first diagram for describing a function of the welding assistance device according to the embodiment of the present disclosure.
[FIG. 4] A second diagram for describing a function of the welding assistance device according to the embodiment of the present disclosure.
[FIG. 5] A third diagram for describing a function of the welding assistance device according to the embodiment of the present disclosure.
[FIG. 6] A second flowchart representing an example of a process of the welding assistance device according to the embodiment of the present disclosure.

### DESCRIPTION OF EMBODIMENTS

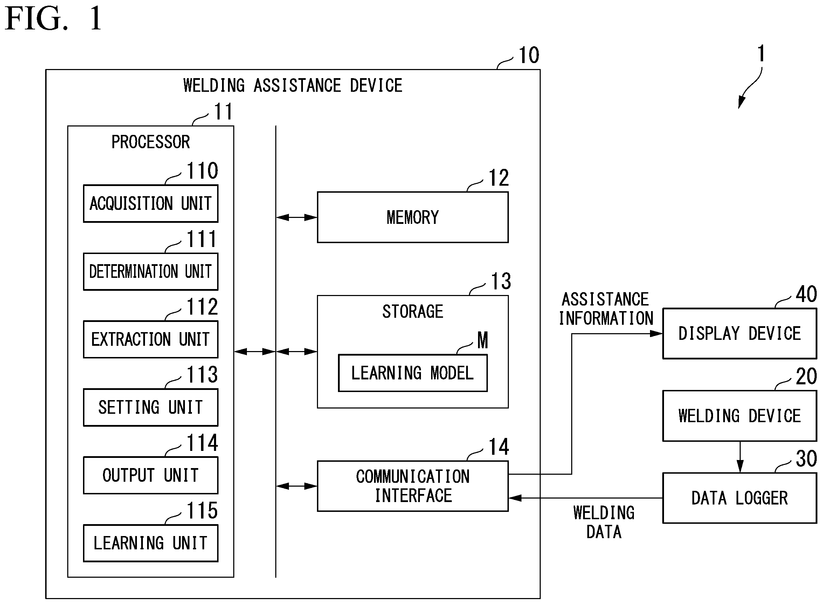

Hereinafter, a welding assistance system 1 and a welding assistance device 10 according to an embodiment of the present disclosure will be described with reference to FIGS. 1 to 6.

### (Overall Configuration of Welding Assistance System)

FIG. 1 is a block diagram representing a functional configuration of a welding assistance device according to an embodiment of the present disclosure.

As represented in FIG. 1, the welding assistance system 1 according to the present embodiment includes the welding assistance device 10, a welding device 20, a data logger 30, and a display device 40.

The welding device 20 includes an operation panel on which devices such as switches and levers for adjusting various parameters having an influence on a welding state, and instruments are provided. A welder performs welding work while adjusting each parameter on the operation panel of the welding device. These parameters are, for example, a welding current, a welding voltage, a protrusion length of an electrode, and the like. The welding state is, for example, an abnormality degree estimated based on the welding data or the like.

The data logger 30 acquires welding data including a plurality of parameters measured by sensors (not represented) provided in each location of as the welding device 20 and the vicinity of a welding part.

The welding assistance device 10 monitors a welding state based on the welding data acquired by the data logger 30 and displays the current welding state and the recommendation range of the value of each parameter on the display device 40 to assist the welding work of the welder.

### (Functional Configuration of Welding Assistance Device)

The welding assistance device 10 includes a processor 11, a memory 12, a storage 13, and a communication interface 14.

The processor 11 operates in accordance with a predetermined program to exhibit functions as an acquisition unit 110, a determination unit 111, an extraction unit 112, a setting unit 113, an output unit 114, and a learning unit 115.

The acquisition unit 110 acquires welding data from the data logger 30.

The determination unit 111 calculates the abnormality degree of the welding data based on the learning model M constructed by learning normal data including welding data collected in a period in which the welding state is normal, and the welding data acquired by the acquisition unit 110.

The extraction unit 112 extracts part of the normal data of the learning model M as the optimal condition range, based on the welding data acquired by the acquisition unit 110.

The setting unit 113 sets a recommendation range of the value of at least one parameter included in the welding data based on the optimal condition range extracted by the extraction unit 112.

The output unit 114 outputs assistance information including the recommendation range set by the setting unit 113. The assistance information is displayed on the display device 40.

The learning unit 115 learns and updates the learning model M based on the welding data collected from the data logger 30.

The memory 12 has a memory area necessary for the operation of the processor 11.

The storage 13 is a so-called auxiliary storage device and is, for example, a hard disk drive (HDD) or a solid-state drive (SSD). The welding data collected from the data logger 30, the learned learning model M, and the like are recoded in the storage 13.

The communication interface 14 is an interface for transmitting and receiving various types of information (signals) to and from an external device (data logger 30, display device 40, and the like).

### (Regarding Welding Assistance Process by Welding Assistance Device)

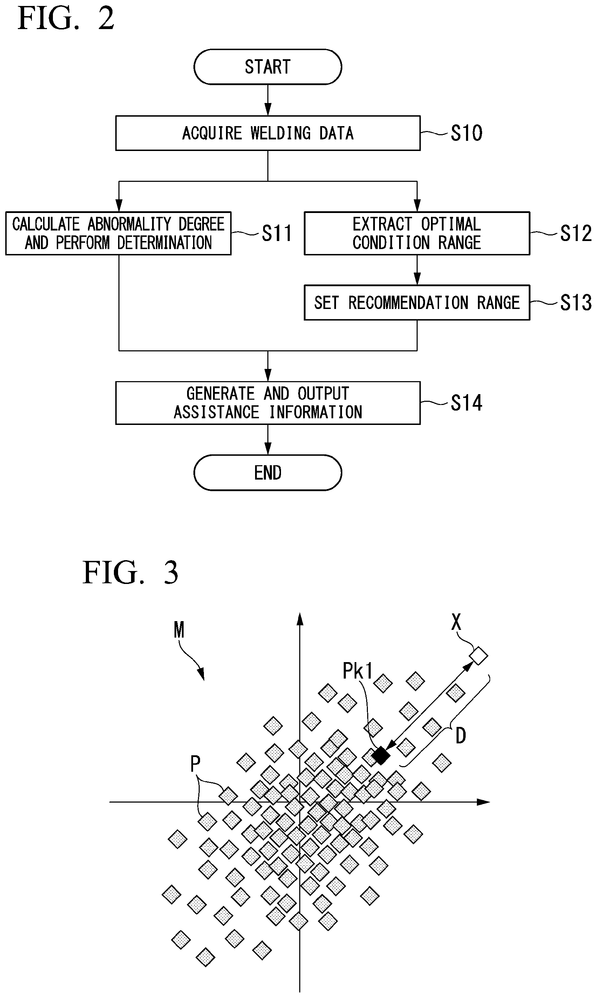

FIG. 2 is a first flowchart representing an example of a process of the welding assistance device according to the embodiment of the present disclosure.

Here, a flow of a welding assistance process by the welding assistance device 10 will be described with reference to FIG. 2.

First, the acquisition unit 110 acquires welding data X from the data logger 30 (Step S10).

The determination unit 111 calculates the abnormality degree of the acquired welding data X based on the acquired welding data X and the learned learning model M and determines whether the welding state is normal or abnormal (Step S11).

FIG. 3 is a first diagram for describing the function of the welding assistance device according to the embodiment of the present disclosure.

The learning model M represented in FIG. 3 is an evaluation model that performs unsupervised learning on the welding data (normal data P) collected in a past period in which the welding state is normal and defines a normal range (normal space) of the welding data. For example, in a case where the normal data P includes two parameters, the normal data P is indicated as a point in a two-dimensional space as in the example of FIG. 3. In practice, the normal data P is data including a larger number of n parameters, and the learning model M is an evaluation model that defines a normal space in an n-dimensional space. It is assumed that the learning model M is constructed by the learning unit 115 before the welding assistance process is performed.

The determination unit 111 selects normal data Pk1 that is the k1-th (for example, tenth) closest to the current welding data X among pieces of the normal data P included in the learning model M, and calculates a distance D between the k1-th normal data Pk1 and the welding data X. The distance D indicates the abnormality degree of the welding data X. The distance D may be, for example, a Euclidean distance obtained by summing up differences between the parameters of the welding data X and the normal data Pk1, or may be a Mahalanobis distance, a Manhattan distance, or the like. In a case where the distance D exceeds a predetermined threshold value, the determination unit 111 determines that the welding state is abnormal (there is a sign of a defect). On the other hand, in a case where the distance D is less than the threshold value, the determination unit 111 determines that the welding state is normal.

In addition, the extraction unit 112 extracts the optimal condition range based on the learning model M and the welding data X (Step S12).

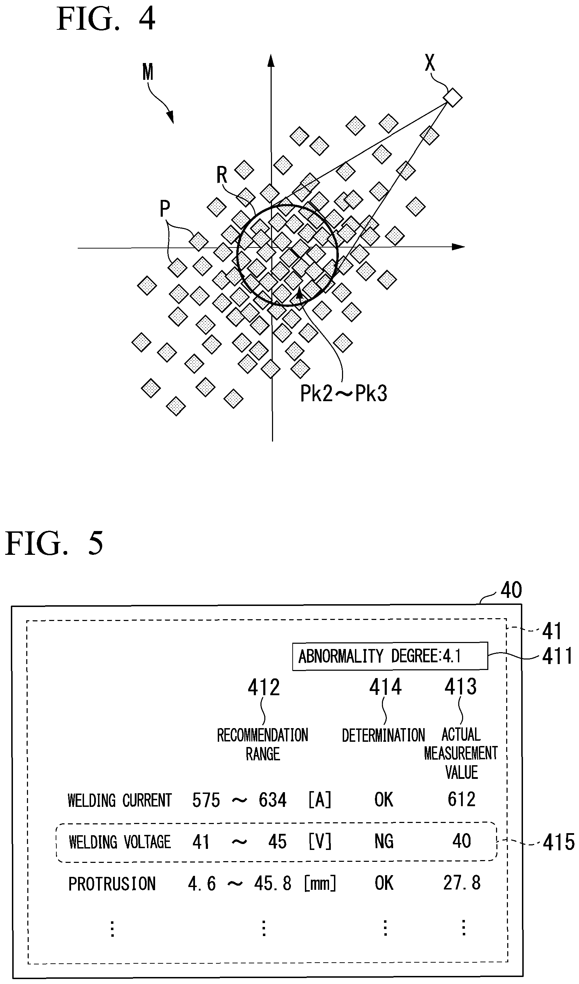

FIG. 4 is a second diagram for describing the function of the welding assistance device according to the embodiment of the present disclosure.

The learning model M represented in FIG. 4 is the same as the learning model M of FIG. 3. The optimal condition range R is part of the normal space formed by the normal data P and is a range in which the welding quality is more stable, and defects are less likely to occur. Specifically, the extraction unit 112 extracts, as the optimal condition range R, a range including the k2-th to k3-th (for example, 9000th to 10000th) normal data P from the current welding data X. That is, the extraction unit 112 extracts a different optimal condition range R according to the acquired welding data X each time the welding data X is acquired.

The extraction unit 112 extracts, as the optimal condition range R, the normal data Pk2 and Pk3 farther from the welding data X than the normal data Pk1 used for calculating the abnormality degree. That is, the values of k2 and k3 are set to values more than k1. As a result, the extraction unit 112 can extract, as the optimal condition range R, a range in which the density of the normal data P is higher (the welding quality is more stable) than the vicinity of the normal data Pk1 used for calculating the abnormality degree in the normal space configured by the normal data P. In addition, the values of k1, k2, and k3 may be freely changed in consideration of the simulation results, the welding quality when the welding work is performed by using the welding assistance device 10, and the like.

Then, the setting unit 113 sets a recommendation range of the value of the parameter included in the welding data X based on the optimal condition range R extracted by the extraction unit 112 (Step S13). Specifically, the setting unit 113 sets a range from the minimum value to the maximum value of each parameter included in the normal data Pk2 to Pk3 in the optimal condition range R, as the recommendation range of the value of each parameter.

FIG. 5 is a third diagram for describing the function of the welding assistance device according to the embodiment of the present disclosure.

As in the example of FIG. 5, it is assumed that the welding data X includes parameters such as a welding current [A], a welding voltage [V], and a protrusion length [mm], as parameters that can be adjusted by the welder through the operation panel of the welding device 20. In addition, in a case where the minimum value of the welding current included in the normal data Pk2 to Pk3 in the optimal condition range R is 575 [A] and the maximum value thereof is 634 [A], the setting unit 113 sets the recommendation range of the value of the welding current to 575 to 634 [A]. The setting unit 113 sets the recommendation range for the other parameters in the similar manner.

Then, the output unit 114 generates assistance information 41 (FIG. 5) including the recommendation range of each parameter set by the setting unit 113 and outputs (displays) the assistance information 41 to the display device 40 (Step S14).

As represented in FIG. 5, the assistance information 41 includes a recommendation range 412 of each parameter, an actual measurement value 413, and a determination result 414. In a case where the actual measurement value 413 of each parameter is within the recommendation range 412, the output unit 114 sets the determination result 414 to "OK (no problem)". In addition, in a case where the actual measurement value 413 exceeds the recommendation range 412, the output unit 114 sets the determination result 414 to "NG (with problem)". In addition, in a case where the determination results 414 is "NG", the output unit 114 may add an improvement suggestion display 415 that emphasizes the parameter with a frame, a background color, a text color, or the like to urge improvement. Further, the output unit 114 may include the abnormality degree 411 calculated by the determination unit 111 or the determination result of the welding state in the assistance information 41.

The welder refers to the assistance information 41 displayed on the display device 40 and operates the welding device 20 to, for example, change or maintain the welding conditions such that the actual measurement value 413 of each parameter falls within the recommendation range 412. In addition, in a case where the actual measurement value 413 of each parameter exceeds the recommendation range 412, the welder changes the welding conditions so that the actual measurement value 413 is quickly within the recommendation range 412. As a result, it is possible to stabilize the welding quality and suppress the occurrence of defects regardless of the degree of proficiency of the welder.

### (Regarding Update Process of Learning Model by Welding Assistance Device)

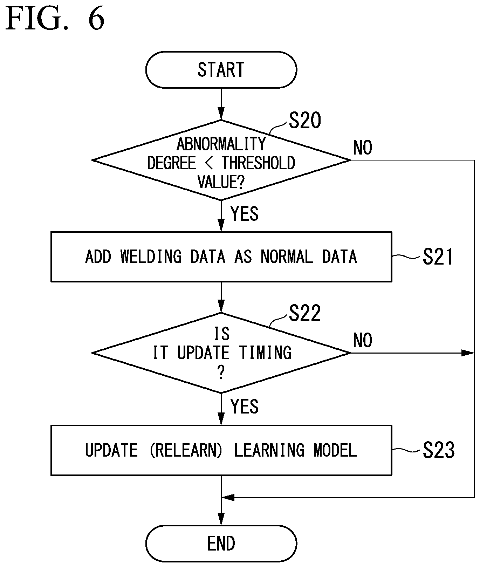

FIG. 6 is a second flowchart representing an example of a process of the welding assistance device according to the embodiment of the present disclosure.

As represented in FIG. 6, the learning unit 115 may update (relearn) the learning model M based on the welding data collected while performing the welding assistance process after the learning model M is constructed. Here, a flow of an update process of the learning model M by the welding assistance device 10 will be described with reference to FIG. 6.

The learning unit 115 determines whether to use the welding data X for learning based on the welding data X acquired in Step S10 of FIG. 2 and the abnormality degree calculated in Step S11. Specifically, the learning unit 115 determines whether the abnormality degree of the welding data X is less than a predetermined threshold value (Step S20).

In a case where the abnormality degree of the welding data X is equal to or greater than the threshold value (Step S20; NO), the welding state is not normal, and thus it is not possible to use the welding data X for learning. Therefore, the learning unit 115 ends the process.

On the other hand, in a case where the abnormality degree of the welding data X is less than the threshold value (Step S20; YES), the welding state is normal, and thus the learning unit 115 adds the welding data X as new normal data P (Step S21). The normal data P is recorded and accumulated in the storage 13.

Then, the learning unit 115 determines whether it is an update timing of the learning model M (Step S22). For example, in a case where the amount of newly added normal data P is equal to or greater than a predetermined amount or a predetermined time has elapsed from the previous update of the learning model M, the learning unit 115 determines that it is the update timing (Step S22; YES). In this case, the learning unit 115 relearns and updates the learning model M based on both the normal data P accumulated in the past and the newly added normal data P (Step S23). The learning unit 115 records the updated learning model M in the storage 13 and ends the process.

In addition, in a case in which it is not the update timing (Step S22; NO), the learning unit 115 ends the process. Each time new welding data X is acquired, the learning unit 115 executes the series of processes in FIG. 6 to add new normal data P and update the learning model M.

### (Actions and Effects)

As described above, the welding assistance device 10 according to the present embodiment includes the acquisition unit 110 that acquires the welding data X, the extraction unit 112 that extracts the optimal condition range R corresponding to the welding data X from the normal data P included in the learning model M used for calculating the abnormality degree, the setting unit 113 that sets the recommendation range 412 of the value of the parameter included in the welding data based on the optimal condition range R, and the output unit 114 that outputs the assistance information 41 including the recommendation range 412.

In this manner, the welding assistance device 10 can suggest an appropriate value for stabilizing the welding quality to the welder for each parameter. As a result, the welding assistance device 10 can stabilize the welding quality and suppress the occurrence of defects regardless of the degree of proficiency of the welder. In addition, the welding assistance device 10 can shorten the processing time in the determination unit 111 and the extraction unit 112 and can quickly feed back the recommendation range to the welder, by using the same learning model M for the calculation of the abnormality degree and the extraction of the optimal condition range R.

In addition, the determination unit 111 selects the k1-th normal data Pk1 from the welding data X among pieces of the normal data P included in the learning model M and calculates the distance between the selected normal data Pk1 and the welding data X, as the abnormality degree. The extraction unit 112 extracts, as the optimal condition range R, the k2-th to k3-th normal data Pk2 to Pk3 farther from the welding data X than the normal data Pk1.

In this manner, in the calculation of the abnormality degree, the welding assistance device 10 can use the normal data Pk1 that is relatively close to the welding data X to suppress an occurrence of a situation in which the abnormality degree that is determined to be excessively abnormal is calculated. On the other hand, in the extraction of the optimal condition range R, the welding assistance device 10 can appropriately extract a range of the normal data P in which the density of the normal data P is high (indicating a more stable welding state). Accordingly, the welding assistance device 10 can appropriately set the recommendation value of each parameter based on the optimal condition range R, and thus can more stabilize the welding quality.

In addition, the setting unit 113 sets a range from the minimum value to the maximum value of each parameter in the optimal condition range R as the recommendation range.

In the related art, a highly advanced and skilled technology in which a welder visually recognizes a welding part and determines an adjustment amount of a parameter by himself/herself such that the welding state is appropriate has been desired. On the other hand, the welding assistance device 10 according to the present embodiment can clearly suggest the recommendation range including the minimum value and the maximum value of each parameter, so that the welder can appropriately adjust the parameter regardless of the degree of proficiency. As a result, it is possible to suppress an occurrence of variation in welding quality due to the welder.

In addition, in a case where the recommendation range does not include the value of the parameter, the output unit 114 outputs the assistance information 41 including the improvement suggestion display 415 of this parameter.

In this manner, the welding assistance device 10 can cause the welder to easily and quickly recognize whether it is necessary to improve the parameters. As a result, it is possible to suppress an occurrence of defects in advance.

In addition, the learning unit 115 updates the learning model M by adding the welding data X acquired when the abnormality degree is less than the predetermined value (that is, the welding state is normal), to the normal data P.

As described above, the welding assistance device 10 accumulates a large amount of normal data P while performing the welding work and updates the learning model M, and thus, it is possible to learn the influence of the characteristics of the welding device 20, the aging deterioration, and the like. Thus, it is possible to suggest the parameter suitable for the welding device 20.

In the above-described embodiment, the process of various types of processes of the welding assistance device 10 is stored in a computer-readable recording medium in a form of a program, and the various types of processes are executed by reading and executing the program by the computer. The computer-readable recording media include magnetic disks, magneto-optical disks, CD-ROMs, DVD-ROMs, semiconductor memories, and the like. Alternatively, this computer program may be distributed to a computer via a communication line, and the computer receiving the distribution may execute the program.

The above program may be for implementing part of the above-described functions. Further, the program may be a so-called difference file (difference program) capable of realizing the functions described above in combination with a program recorded in advance in the computer system.

Some embodiments of the present disclosure have been described above. However, all of these embodiments are only examples and are not intended to limit the scope of the invention. These embodiments can be implemented in various other forms, and various omissions, replacements, and changes can be made without departing from the gist of the invention. These embodiments and modifications thereof are included in the scope of the invention described in the claims and the equivalent scope thereof, as well as in the scope and gist of the invention.

### <Supplementary Notes>

The welding assistance device, the welding assistance method, and the program described in the above-described embodiment are ascertained as follows, for example.

(1) According to a first aspect of the present disclosure, a welding assistance device 10 includes an acquisition unit 110 configured to acquire welding data X including a plurality of parameters indicating a welding state, a determination unit 111 configured to calculate an abnormality degree of the welding data X based on a learning model M constructed by learning normal data P including welding data collected during a period in which the welding state is normal, and the welding data X acquired by the acquisition unit 110, an extraction unit 112 configured to extract, based on the welding data X, part of the normal data P of the learning model M as an optimal condition range R, a setting unit 113 configured to set a recommendation range of a value of at least one parameter included in the welding data X based on the optimal condition range R, and an output unit 114 configured to output assistance information including the recommendation range.
   In this manner, the welding assistance device 10 can suggest an appropriate value for stabilizing the welding quality to the welder for each parameter. As a result, the welding assistance device 10 can stabilize the welding quality and suppress the occurrence of defects regardless of the degree of proficiency of the welder. In addition, the welding assistance device 10 can shorten the processing time in the determination unit 111 and the extraction unit 112 and can quickly feedback the recommendation range to the welder, by using the same learning model M for the calculation of the abnormality degree and the extraction of the optimal condition range R.
(2) According to a second aspect of the present disclosure, in the welding assistance device 10 according to the first aspect, the determination unit 111 selects normal data Pk1 that is k1-th normal data close to the welding data X among pieces of the normal data P of the learning model M, and calculates a distance between the selected normal data Pk1 and the welding data X as the abnormality degree of the welding data X, and the extraction unit 112 extracts, as the optimal condition range R, pieces of normal data Pk2 to Pk3 that are k2-th to k3-th normal data farther from the welding data X than the normal data Pk1 selected by the determination unit 111.
   In this manner, in the calculation of the abnormality degree, the welding assistance device 10 can use the normal data Pk1 that is relatively close to the welding data X to suppress an occurrence of a situation in which the abnormality degree that is determined to be excessively abnormal is calculated. On the other hand, in the extraction of the optimal condition range R, the welding assistance device 10 can appropriately extract a range of the normal data P in which the density of the normal data P is high (indicating a more stable welding state). Accordingly, the welding assistance device 10 can appropriately set the recommendation value of each parameter based on the optimal condition range R, and thus can more stabilize the welding quality.
(3) According to a third aspect of the present disclosure, in the welding assistance device 10 according to the first or second aspect, the setting unit 113 sets a range from a minimum value to a maximum value of the parameter in the optimal condition range as the recommendation range.
   In this manner, the welding assistance device 10 can clearly suggest the recommendation range including the minimum value and the maximum value of each parameter, so that the welder can appropriately adjust the parameter regardless of the degree of proficiency. As a result, it is possible to suppress an occurrence of variation in welding quality due to the welder.
(4) According to a fourth aspect of the present disclosure, in the welding assistance device 10 according to any one of the first to third aspects, the output unit 114 outputs assistance information including an improvement suggestion of the parameter in a case where the value of the parameter is not included in the recommendation range.
   In this manner, the welding assistance device 10 can cause the welder to easily and quickly recognize whether or not it is necessary to improve the parameters. As a result, it is possible to suppress an occurrence of defects in advance.
(5) According to a fifth aspect of the present disclosure, the welding assistance device 10 according to any one of the first to fourth aspects further includes a learning unit 115 that updates the learning model M by adding the welding data X to the normal data P in a case where the abnormality degree is less than a predetermined threshold value.
   As described above, the welding assistance device 10 accumulates a large amount of normal data P while performing the welding work and updates the learning model M, and thus, it is possible to learn the influence of the characteristics of the welding device 20, the aging deterioration, and the like. Thus, it is possible to suggest the parameter suitable for the welding device 20.
(6) According to a sixth aspect of the present disclosure, a welding assistance method includes a step of acquiring welding data X including a plurality of parameters indicating a welding state, a step of calculating an abnormality degree of the welding data X based on a learning model M constructed by learning normal data P including welding data collected during a period in which the welding state is normal, and the acquired welding data X, a step of extracting, based on the welding data X, part of the normal data P of the learning model M as an optimal condition range R, a step of setting a recommendation range of a value of at least one parameter included in the welding data X based on the optimal condition range R, and a step of outputting assistance information including the recommendation range.
(7) According to a seventh aspect of the present disclosure, a program causes a welding assistance device 10 to perform: a step of acquiring welding data X including a plurality of parameters indicating a welding state; a step of calculating an abnormality degree of the welding data X based on a learning model M constructed by learning normal data P including welding data collected during a period in which the welding state is normal, and the acquired welding data X; a step of extracting, based on the welding data X, part of the normal data P of the learning model M as an optimal condition range R; a step of setting a recommendation range of a value of at least one parameter included in the welding data X based on the optimal condition range R; and a step of outputting assistance information including the recommendation range.

### INDUSTRIAL APPLICABILITY

With the welding assistance device, the welding assistance method, and the program according to the present disclosure, it is possible to stabilize welding quality and suppress the occurrence of a welding defect in welding work performed by a welder.

### REFERENCE SIGNS LIST

1: Welding assistance system
10: Welding assistance device
11: Processor
110: Acquisition unit
111: Determination unit
112: Extraction unit
113: Setting unit
114: Output unit
115: Learning unit
12: Memory
13: Storage
14: Communication interface
20: Welding device
30: Data logger
40: Display device

## Claims

1. A welding assistance device comprising:
an acquisition unit configured to acquire welding data including a plurality of parameters indicating a welding state;
a determination unit configured to calculate an abnormality degree of the welding data based on a learning model constructed by learning normal data including welding data collected during a period in which the welding state is normal, and the welding data acquired by the acquisition unit;
an extraction unit configured to extract, based on the welding data, part of the normal data of the learning model as an optimal condition range;
a setting unit configured to set a recommendation range of a value of at least one parameter included in the welding data based on the optimal condition range; and
an output unit configured to output assistance information including the recommendation range.

2. The welding assistance device according to Claim 1,
wherein the determination unit selects normal data that is k1-th normal data close to the welding data among pieces of the normal data of the learning model, and calculates a distance between the selected normal data and the welding data as the abnormality degree of the welding data, and
the extraction unit extracts, as the optimal condition range, pieces of normal data that are k2-th to k3-th normal data farther from the welding data than the normal data selected by the determination unit.

3. The welding assistance device according to Claim 1 or 2,
wherein the setting unit sets, as the recommendation range, a range from a minimum value to a maximum value of the parameter in the optimal condition range.

4. The welding assistance device according to Claim 1 or 2,
wherein the output unit outputs the assistance information including an improvement suggestion of the parameter in a case where the value of the parameter is not included in the recommendation range.

5. The welding assistance device according to Claim 1 or 2, further comprising:
a learning unit that updates the learning model by adding the welding data to the normal data in a case where the abnormality degree is less than a predetermined threshold value.

6. A welding assistance method comprising:
a step of acquiring welding data including a plurality of parameters indicating a welding state;
a step of calculating an abnormality degree of the welding data based on a learning model constructed by learning normal data including welding data collected during a period in which the welding state is normal, and the acquired welding data;
a step of extracting, based on the welding data, part of the normal data of the learning model as an optimal condition range;
a step of setting a recommendation range of a value of at least one parameter included in the welding data based on the optimal condition range; and
a step of outputting assistance information including the recommendation range.

7. A program causing a welding assistance device to perform:
a step of acquiring welding data including a plurality of parameters indicating a welding state;
a step of calculating an abnormality degree of the welding data based on a learning model constructed by learning normal data including welding data collected during a period in which the welding state is normal, and the acquired welding data;
a step of extracting, based on the welding data, part of the normal data of the learning model as an optimal condition range;
a step of setting a recommendation range of a value of at least one parameter included in the welding data based on the optimal condition range; and
a step of outputting assistance information including the recommendation range.
